## Europäisches Patentamt
## European Patent Office
## Office européen des brevets

(19)

(11) Veröffentlichungsnummer: **0 073 952**
**B1**

(12) # EUROPÄISCHE PATENTSCHRIFT

(45) Veröffentlichungstag der Patentschrift:
08.04.87

(51) Int. Cl.⁴: **F 02 P 5/04**

(21) Anmeldenummer: **82107349.1**

(22) Anmeldetag: **13.08.82**

(54) Elektronisch geregeltes Zündsystem.

(30) Priorität: **03.09.81 DE 3134883**
**06.03.82 DE 3208088**

(43) Veröffentlichungstag der Anmeldung:
**16.03.83 Patentblatt 83/11**

(45) Bekanntmachung des Hinweises auf die Patenterteilung:
**08.04.87 Patentblatt 87/15**

(84) Benannte Vertragsstaaten:
**FR GB IT**

(56) Entgegenhaltungen:
**FR-A-2 296 773**
**US-A-3 867 916**
**US-A-4 077 372**
**US-A-4 276 860**

(73) Patentinhaber: **TELEFUNKEN electronic GmbH,**
**Theresienstrasse 2, D-7100 Heilbronn (DE)**
Patentinhaber: **BAYERISCHE MOTOREN WERKE**
**Aktiengesellschaft, Postfach 40 02 40 Petuelring**
**130 - AJ- 36, D-8000 München 40 (DE)**

(72) Erfinder: **Guggenmos, Johannes, Fabrikstrasse 6,**
**D-8949 Dirlewang (DE)**
Erfinder: **Krappel, Alfred, Elisabethweg 2, D-8045**
**Ismaning (DE)**
Erfinder: **Minner, Willy, Im Eselsberg 120, D-7103**
**Schwaigern (DE)**

(74) Vertreter: **Maute, Hans- Jürgen, Dipl.- Ing.,**
**TELEFUNKEN electronic GmbH Theresienstrasse**
**2, D-7100 Heilbronn (DE)**

EP 0 073 952 B1

## Beschreibung

Die Erfindung betrifft ein elektronisch geregeltes Zündsystem, nach dem Oberbegriff des anspruches 1. Ein derartiges Zündsystem ist aus der US-PS 4077 372 bekannt, bei dem die Steilheiten der beiden Flanken des sägezahnförmigen, aus dem Steuersignal abgeleiteten Spannungssignals so veränderbar sind, daß zwei unterschiedliche und definierte Zündverzögerungswerte eingestellt werden können.

Bei dem bekannten Zündsystem wird innerhalb jeweils eine Periode des mäandeförmigen Steuersignals aus nur einer Flanke dieses Steuersignals ein sägezahnförmiges Signal mit einer ansteigenden Flanke und einer abfallenden Flanke erzeugt wird, wobei das Verhältnis der Steilheiten beider Flanken ein Maß für die Veränderung des Korrektursignals gegenüber dem Steuersignal ist.

Ein derartig elektronisch geregeltes Zündsystem hat den Vorteil, daß zur Erzeugung der Korrekturgröße nicht beide Flanken des mäanderförmigen Steuersignals innerhalb einer Periode herangezogen werden müssen.

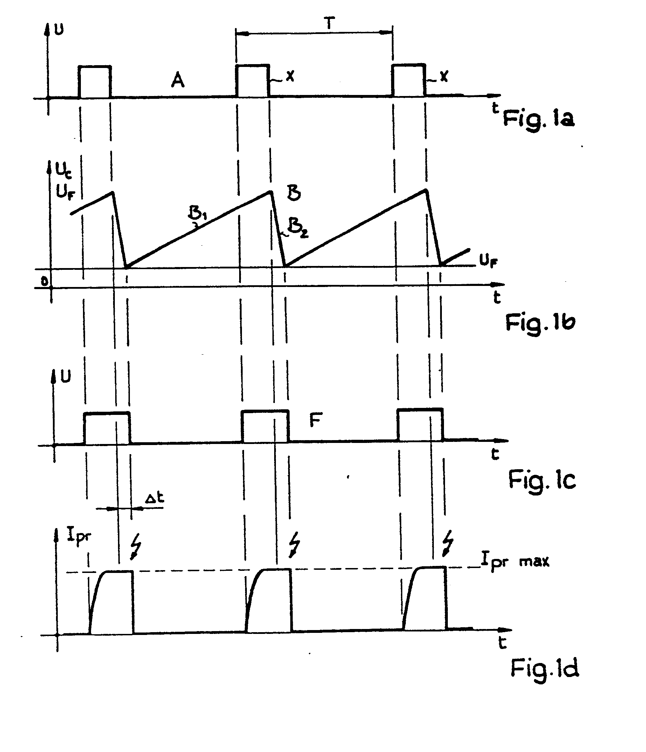

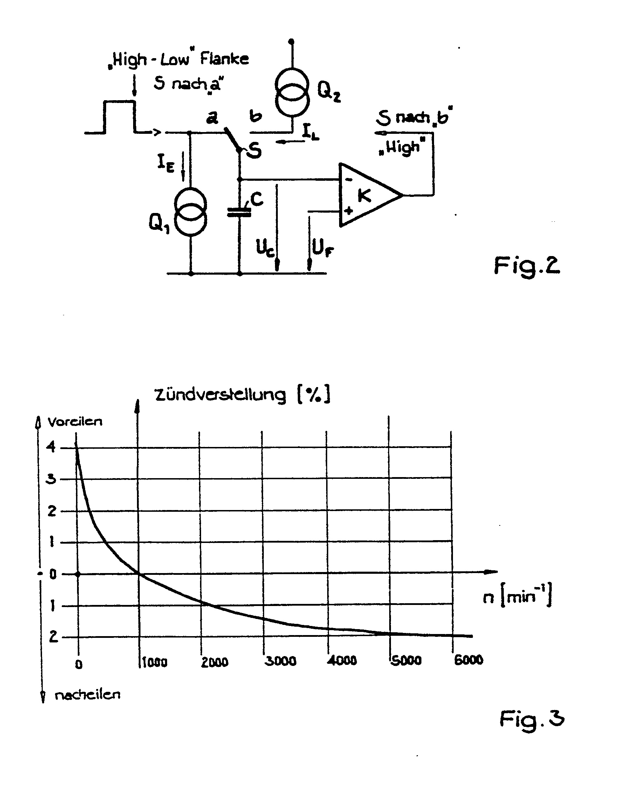

Die bekannte Methode zur Erzeugung eines Korrektursignals wird an Hand der Figuren 1a und 1d und der Figur 2 naher erläutert.

Vom Ausgangssignal eines Zündimpulsgebers, beispielsweise eines Induktionsgebers, wird ein Steuersignal A gemäß Figur 1a abgeleitet. Dieses Steuersignal ist mäanderförmig und hat die Periodendauer T. Innerhalb einer Periodendauer T wird die abfallende High-Low-Flanke X als Steuerflanke zur Erzeugung eines sägezahnförmigen Signals gemäß Figur 1b herangezogen.

Mit der Steuerflanke X wird bei einer Prinzipschaltung gemäß Figur 2 der Entladestrom $I_E$ einer Stromquelle $Q_1$ freigegeben, so daß sich der zuvor aufgeladene Kondensator C gemäß der abfallenden Flanke $B_2$ in der figur 1b über den Schalter S in der Stellung "a" entlädt. Die Kondensatorspannung $U_C$ wird an einem Komparator K mit der Festspannung $U_F$ verglichen. Sinkt $U_C$ und $U_F$ ab, dann schaltet der Ausgang des Komparators K den Schalter S in die Stellung "b", wodurch der Kondensator C mit dem Ladestrom $I_L$ der Konstantstromquelle $Q_2$ aufgeladen wird, so daM die Spannung am Kondensator C gemäß der Anstiegsflanke $B_1$ in Figur 1b ansteigt. Die Steilheiten der Flanken $B_1$ und $B_2$ sind durch die Größe des Auflade- bzw. des Entladestroms aus den Stromquellen $Q_1$ und $Q_2$ vorgegeben. Der Gesamtverlauf der Spannung $U_C$ am Kondensator ist als Funktionsverlauf B in der Figur 1b dargestellt.

Der Steuerimpuls gemäß der Figur 1a wird nunmehr um die Korrekturgröße, nämlich die Zeit $\Delta t$ verlängert, die der Dauer des Entladevorgangs des Kondensators und damit der abfallenden Flanke $B_2$ entspricht. Das so gewonnenen Korrektursignal F ist in der Figur 1c dargestellt. Dieses Korrektursignal kann beispielsweise anstelle des Steuersignals A zur Steuerung des Stroms in der Primärseite der Zündspule herangezogen werden. Dann beginnt gemäß der Figur 1d der Primärstrom $I_{pr}$ mit der Low-High-Flanke des Korrektursignals F zu fließen und wird mit dem Auftreten der High-Low-Flanke dieses Korrektursignals F abrupt abgebrochen, so daß es zur Zündung kommt, was in der Figur 1d durch Zündpfeile angedeutet ist. Damit wird der Zündzeitpunkt um die Zeit $\Delta t$ gegenüber dem Zündzeitpunkt, der sich bei Heranziehung des Steuersignals A ergeben hätte, verzögert.

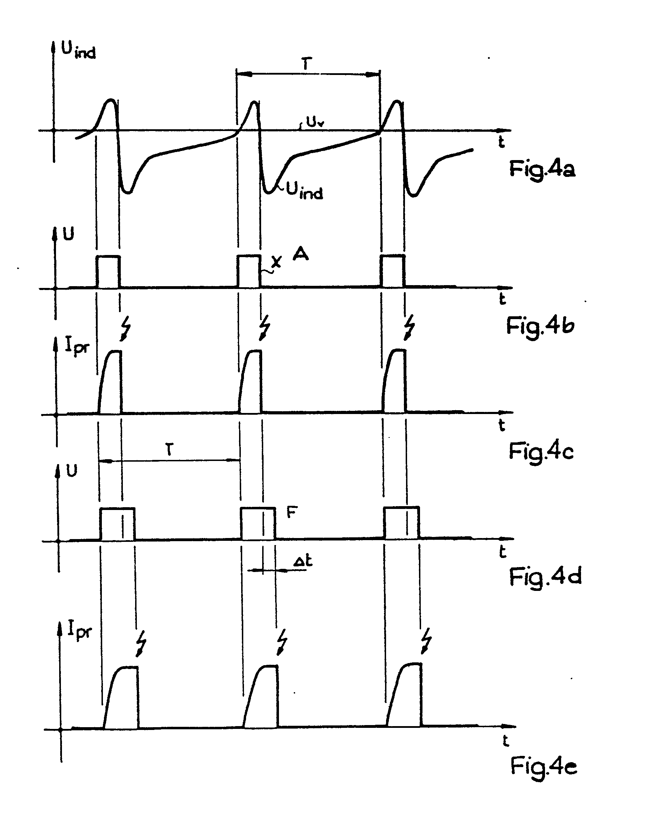

Beim Induktionsgeber ist - wie sich aus Figur 3 ergibt - der Spannungsnulldurchgang der die Zündung auslösenden Steuerflanke X des Steuersignals A gemäß Figur 1a nicht in Übereinstimmung mit der mechanischen Stellung des Rotors.

Wird der Spannungs-Nulldurchgang bei z.B. 1000 U/min (Leerlaufdrehzahl) zu der mechanischen Stellung des Rotors justiert, dann zeigt figur 3, daß in der Startphase bei 150 U/min der Nulldurchgang des Steuersignals um 4 %-6 %, bezogen auf die Periodendauer, voreilt und bei der Höchstdrehzahl um ca. 2 % nacheilt. Da mit dem Spannungs-Nulldurchgang des Steuersignals der Zündfunke ausgelöst wird, verhält sich der Induktionsgeber gegensätzlich zu den Anforderungen, die ein Motor für ein gutes Laufverhalten speziell in der Startphase erfordert.

Mit Hilfe der beschriebenen elektronisch geregelten Zündung kann die durch den Induktionsgeber verursachte Voreilung eliminiert werden.

In Figur 4a ist die Spannung $U_{IND}$ aufgetragen, die ein Induktionsgeber liefert. Mit T ist die Periode und mit $U_V$ die Vergleichsspannung eines Komparators bezeichnet. Die Figur 4b zeigt den mäanderförmigen Spannungsverlauf A am Ausgang des Komparators.

Ist $U_{IND} \geqq U_V$ dann ist A "High", sonst "Low". Mit dem Ausgangssignal A des Komparators wird der Strom $I_r$ gemäß Figur 4b in der Primärseite der Zündspule bei "High" eingeschaltet und mit der "High-Low"-Flanke des Signals A abrupt abgeschaltet, so daß es zur Zündung kommt. In der Startphase soll beispielsweise die Abschaltflanke X für den Primärspulenstrom $I_{pr}$ und damit das Auslösen der Zündung um das Zeitintervall $\Delta t$ verlängert werden, um die durch den Induktionsgeber bedingte Voreilung des Zündzeitpunktes zu kompensieren bzw. zu überkompensieren.

In Figur 4d ist das korrigierte Signal F dargestellt, dessen High-Phasen um das gewünschte Zeitintervall $\Delta t$ so verlängert sind, daß die die Zündung auslösende High-Low-Flanke gegenüber der Steuerflanke X des Steuersignals A um diese Zeit $\Delta t$ verzögert wird. Dadurch wird erreicht, daß auch der Primärstrom $I_{pr}$ gemäß Figur 4e gleichfalls um die Zeit $\Delta t$ verzögert in der die Zündung auslösenden Weise abgeschaltet wird.

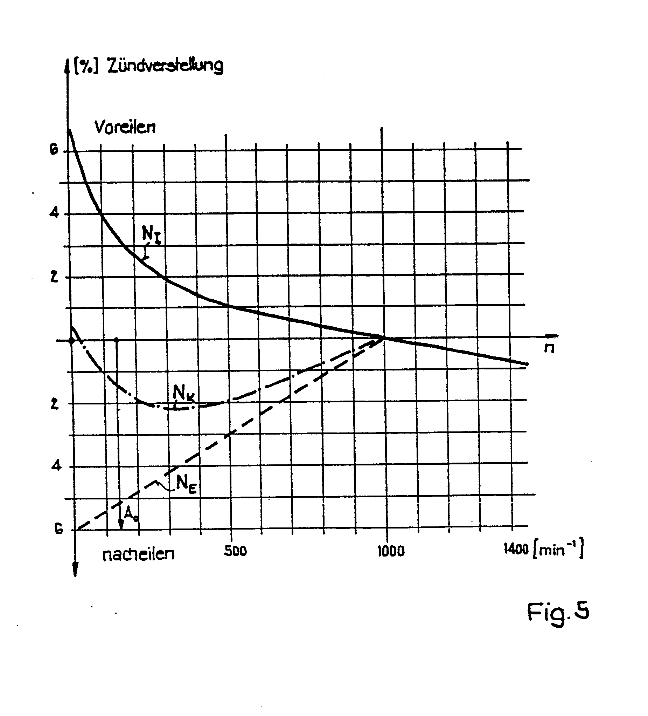

Der Erfindung liegt die Erkenntnis zugrunde, daß bei der Korrektur der voreilenden Zündung in der Startphase ein Verlauf erwünscht ist, der an Hand der Figur 5 näher erläutert wird.

In Figur 5 ist im gegenüber der Figur 3 vergrößerten Maßstab die Startphase des Motors dargestellt. Der Kurvenverlauf $N_I$ zeigt das Voreilen des Nulldurchganges des Steuersignales A in Abhängigkeit von der Drehzahl n zwischen 0 und 1000 Umdrehungen je Minute. Die vorgesehene elektronische Kompensation ist durch den Funktionsverlauf der Geraden $N_E$ dargestellt. Die Gerade hat die Funktion:

$$N_E = A_0 - x \cdot n$$

Der Wert $A_0$ wird beispielsweise mit $A_0 = 6\,\%$ gewählt. Wenn die Gerade $N_E$ bei 1000 U/min eine Zündverstellung von 0 % bewirken soll, so hat X den Wert

$$X = \frac{0,006\,\%}{U/min}$$

n gibt die Drehzahl des Motors pro Minute an.

Bei Addition der Funktionsläufe von $N_I$ und $N_E$ erhält man den kompensierten Funktionsverlauf $N_K$ gemäß Figur 5. Diese Funktion zeigt, daß in der Startphase eine erwünschte Nacheilung von maximal 2 % erzielt wird, die beim Erreichen von 1000 U/min auf 0 abgesunken ist. Die gewünschte elektronische Kompensation $N_E$ erhält man dann, wenn für das Korrektursignal F in d Figur 4d gilt,

$$N_E = \Delta t\,(\%)$$

soll nun bei einem Signal F gemäß Figur 1c die elektronisch bewirkte Verlängerung des Steuersignales A gemäß Figur 1a den Wert

$$\Delta t = 6\,\%$$

betragen, so ist das Verhältnis des Ladestromes $I_L$ zum Entladestrom $I_E$ bei einer Schaltungsanordnung gemäß der Figur 2 mit dem Wert

$$\frac{I_L}{I_E} = 0,06$$

zu wählen.

Wird nun gemäß Figur 1d der Primärspulenstrom $I_{pr}$ mit der Low-High-Flanke des Steuersignals A eingeschaltet und abgeschaltet, wenn das sägezahnförmige Signal B gemäß Figur 1d unter den Wert der Festspannung $U_F$ fällt, so wird der Zündzeitpunkt mit Hilfe des Korrektursignals F um 6 % gegenüber dem Zeitpunkt verschoben, der sich bei einer Zündung mit dem Steuersignal A ergeben hätte.

Bei dieser sich aus den Figuren 1a bis 1d ergebenden Kompensationsmethode ist der prozentuale Versatz $\Delta t/T$ des Korrektursignals F gegenüber dem Steuersignal A von der kleinsten gewählten Drehzahl, beispielsweise bei 50 U/min, bis zu den höchsten Drehzahlen konstant und würde im dargelegten Beispiel 6 % betragen. Der Erfindung liegt nun die Aufgabe zugrunde, ein Zündsystem anzugeben, bei dem gemäß figur 5 der Prozentwert der Kompensation $N_E$ mit steigender Drehzahl abnimmt und beispielsweise bei ca. 1000 U/min den Wert 0 erreicht.

Diese Aufgabe wird durch die Merkmale des Anspruches 1 gelöst.

In bestimmten Fällen ist es in einer Weiterbildung der Erfindung sinnvoll, Mittel zur Abschaltung des Korrektursignals vorzusehen. Auf diese Weise wird das Zündsystem universell für eine breite Motoren- bzw. Fahrzeugpalette verwendbar. Ein und dasselbe Zündsystem kann beispielsweise durch wahlweise festes oder betriebsparameterabhängiges Beschalten von außen auf die Bedürfnisse der einzelnen Motoren bezüglich des Zündwinkels abgestimmt werden. Durch diese Vereinheitlichung des Zündsystems ergibt sich eine Kostensenkung beim Hersteller, eine Verringerung des Lageraufwands, und ferner lassen sich Verwechslungen vermeiden.

Die Ein- bzw. Ausschaltung des Korrektursignals kann auf unterschiedliche Weise in Abhängigkeit von den jeweiligen Betriebs- und Einsatzbedingungen erfolgen. So kann das Korrektursignal nur während des Anlaßvorgangs der Brennkraftmaschine wirksam geschaltet sein. Ein für diesen Vorgang repräsentatives Signal liegt beispielsweise am Ausgang "50" eines Zünd-/Anlaßschalters vor. Bei einem derartigen Zündsystem ergibt sich ein besonders einfacher Schaltungsaufbau, da üblicherweise vorgesehene drehzahlspezifische Schaltelemente, die das Korrektursignal bei Erreichen einer vorgegebenen Drehzahl abschalten, entfallen können.

Alternativ oder ergänzend hierzu kann das Korrektursignal auch in Abhängigkeit von Parametern der Brennkraftmaschine schaltbar sein. Hier bietet sich die Motortemperatur an. Es hat sich nämlich gezeigt, daß das Korrektursignal gerade bei tiefen Betriebstemperaturen den Anlaßvorgang deutlich verbessert, während bei einem sogenannten Heißstart das Steuersignal allein einen zufriedenstellenden Anlaßvorgang sichert.

Als weiteres kann das Korrektursignal bei bestimmten Fahrzeugmodellen bzw. Motorausführungen unwirksam geschaltet sein. In diesen Fällen genügt zwar ein vereinfachtes Zündsystem, bei dem das Korrektursignal nicht erzeugt wird. Dies würde jedoch zwei verschiedene Arten des Zündsystems erforderlich Machen und die Vorteile der Erfindung ins Gegenteil verkehren.

Der Potentialabstand zwischen der nach der Erfindung neu eingeführten festspannung $U_S$ und der Referenzspannung $U_F$ muß so gewählt werden, daß beim Erreichen einer bestimmten Schwelldreh- zahl des Rotors - beispielsweise bei 1000 U/min - das sägezahnförmige Signal in seinem Maximum den Festspannungswert $U_S$ gerade nicht mehr erreicht, so daß ab dieser Schwelldrehzahl das Steuersignal A nicht mehr verlängert bzw. die Steuerflanke X nicht mehr verzögert wird. Unterhalb dieser Schwelldrehzahl nimmt dagegen die Verlängerung des Korrektursignals bzw. die Verzögerung der die Zündung auslösenden Flanke mit abnehmender Drehzahl zu.

Bei einem Ausführungsbeispiel betrug die Steilheit des Spannungsanstieges am Kondensator - also die Steilheit der Flanke $B_1$

gemäß Fig. 1b - S = 4,3 V/sec bei einer Referenzspannung $U_F$ = 0,4 V. Bei 50 U/min sollte die Kompensation der Zündverstellung 6 % betragen.

Bei dieser Drehzahl erreichte die Spannung am Kondensator ihren maximalen Wert von beispielsweise $U_{Cmax}$ = 3 V. Bei diesem Ausführungsbeispiel fällt der Maximalwert des sägezahnförmigen Signals B bei 1000 U/min gerade dann mit dem Festspannungswert $U_S$ zusammen, wenn der Potentialabstand $\triangle U$ ca. 130 mV zwischen der Festspannung $U_S$ und der Referenzspannung $U_F$ beträgt.

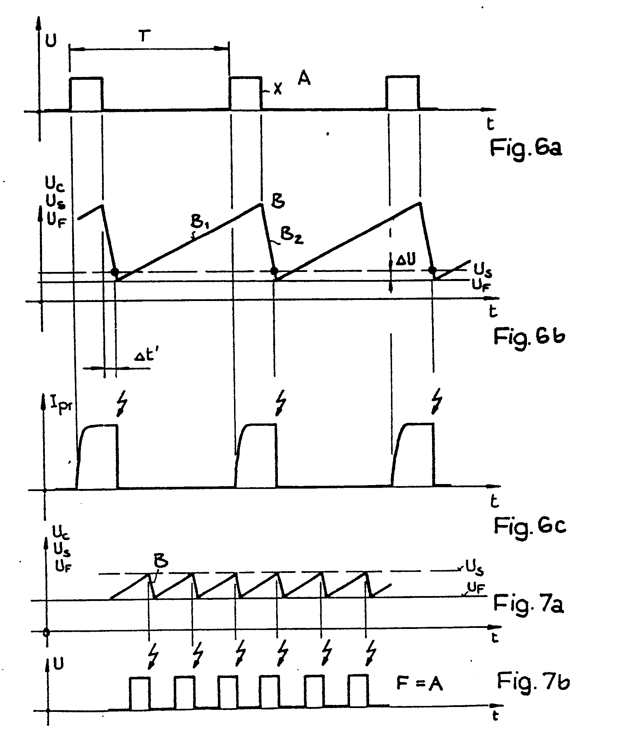

Die Verhältnisse unter Einfügung der Festspannung $U_S$ sind in den Figuren 6a bis 6c und 7a bis 7b dargestellt. Bei einer sehr kleinen Drehzahl fällt gemäß der Figur 6b der Schnittpunkt zwischen der abfallenden Flanke $B_2$ des sägezahnförmigen Signals B mit der Festspannung $U_S$ fast mit dem Schnittpunkt der abfallenden Flanke $B_2$ und der Referenzspannung $U_F$ zusammen. Dies liegt daran, daß die Potentialdifferenz $\triangle U$ klein ist gegenüber der Maximalspannung des sägezahnförmigen Signals B. Diese Verhältnisse gelten beispielsweise bei einer Drehzahl von 50 U/min. Der Zündzeitpunkt wird folglich mit Hilfe des sägezahnförmigen Signals B gemäß Fig. 6c bei kleinen Drehzahlen und bei den angegebenen Verhältnissen um

$$\frac{\triangle t'}{T} = 6\%$$

verzögert.

Diese prozentuale Verzögerung des Zündzeitpunktes nimmt mit zunehmender Drehzahl ab, da der Maximalwert des Signals B bei steigender Drehzahl ständig sinkt und somit ein größerer Anteil der abfallenden Flanke $B_2$ des sägezahnförmigen Signals B in den Potentialbereich zwischen $U_S$ und $U_F$ fällt.

Bei den angeführten beispielhaften Verhältnissen beträgt die Verzögerung des Zündzeitpunktes bei 125 U/min etwa 5,2 %, bei 250 U/min ca. 4,5 %, bei 500 U/min ca. 3 % und bei 1000 U/min etwa 0 Prozent.

Die Figuren 7a und 7b zeigen die Verhältnisse bei einer Drehzahl von ca. 1000 Umdrehungen je Minute. Gemäß Figur 7a pendelt das sägezahnförmige Signal B aufgrund der gewählten Dimensionierung bei 1000 U/min nur noch zwischen der Festspannung $U_S$ und Referenzspannung $U_F$. Das Zeitintervall $\triangle t'$ zwischen dem maximalen Wert des sägezahnförmigen Signals B und der Festspannung $U_S$ wird somit bei der Drehzahl 1000 U/min. zu Null. Gemäß Fig. 7b ist dann das Korrektursignal F identisch mit dem vom Induktionsgeber abgeleiteten Steuersignal A. Eine Kompensation der Zündverstellung erfolgt somit nur im Drehzahlbereich zwischen 0 und 1000 U/min.

Bei der schaltungstechnischen Ausführung des erfindungsgemäßen elektronisch geregelten Zündsystemes sind Stromquellen vorhanden, über die der Kondensator zur Erzeugung des sägezahnförmigen Signals B in der beschriebenen Weise auf- und entladen wird.

Ferner ist ein Komparator $K_1$ vorhanden, an dem die Kondensatorspannung mit der Referenzspannung $U_F$ verglichen wird. An einem zweiten Komparator $K_2$ wird die Kondensatorspannung mit der Festspannung $U_S$ verglichen. Ferner enthält die Schaltung eine bistabile Kippstufe FF, die über den Ausgang des ersten Komparators in den einen stabilen Zustand und von der Low-High-Flanke des Steuersignales A in den anderen stabilen Zustand übergeführt wird.

Das Ausgangssignal F gewinnt man dadurch, daß die Schaltung ein NOR-Gatter G enthält, dessen einem Eingang das Ausgangssignal der Kippstufe FF und dessen anderem Eingang das Ausgangssignal des zweiten Komparators K2 zugeführt wird.

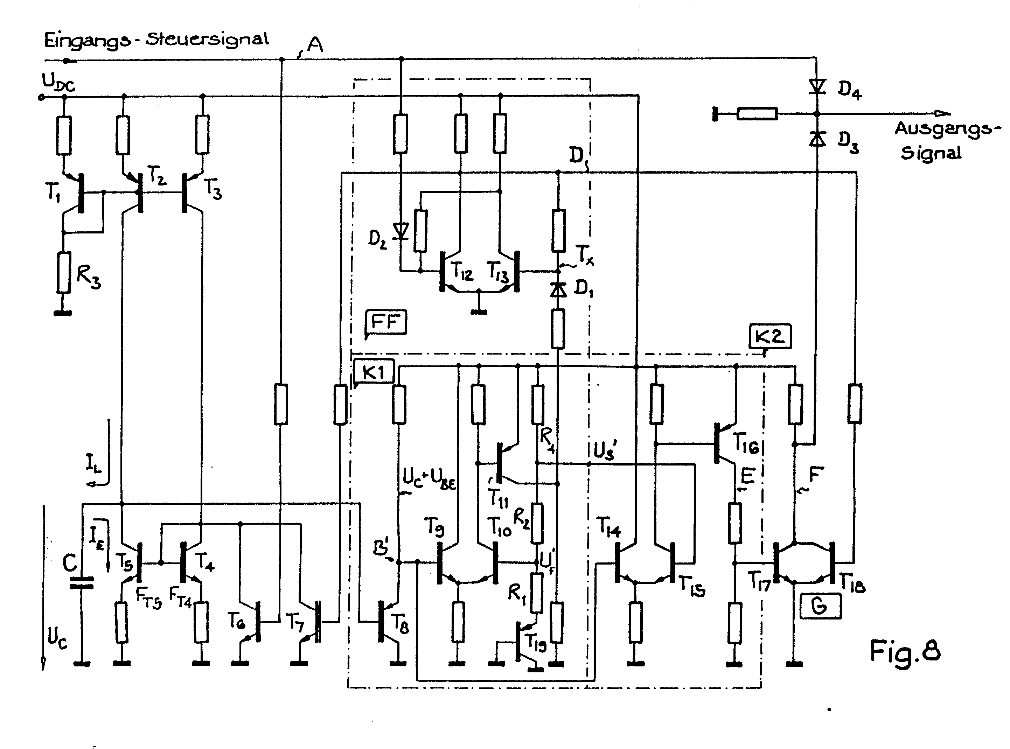

Eine derartige Schaltung ist in der Figur 8 dargestellt. Der Kondensator C wird mit dem Ladestrom $I_L$ geladen und mit dem Entladestrom $I_E$ entladen. Der Ladestrom $I_L$ wird mit dem Stromspiegel aus den Transistoren $T_1$ und $T_2$ in Verbindung mit dem Widerstand $R_3$ im Kollektorzweig des Transistors $T_1$ eingestellt. Der Entladestrom wird über den Stromspiegel aus den Transistoren $T_3$, $T_4$ und $T_5$ eingestellt, wobei für das Verhältnis der aktiven Transistorflächen der Transistoren $T_4$ und $T_5$ gelten muß:

$$\frac{F_{T_5}}{F_{T_4}} = \frac{I_L}{I_E} + 1.$$

Dabei wird berücksichtigt, daß der Ladestrom $I_L$ ständig fließt, während der Entladestrom $I_E$ nur dann freigegeben wird, wenn die Transistoren $T_6$ und $T_7$, die der Basis-Emitterstrecke des Transistors $T_5$ parallel geschaltet sind, gesperrt sind.

Die Spannung $U_C$ am Kondensator C wird über den Transistor $T_8$ auf den einen Eingang des Komparators $K_1$ gegeben. Der Komparator $K_1$ besteht aus dem Differenzverstärker mit den Transistoren $T_9$ und $T_{10}$ und dem Endtransistor $T_{11}$. An der Basiselektrode des Transistors $T_9$ liegt somit die um die Basisemitterspannung des Transistors 8 erhöhte Kondensatorspannung B'. Am zweiten Eingang des Komparators $K_1$, also an der Basiselektrode des Transistors $T_{10}$, liegt die Referenzspannung $U'_F$. Sie ist gegenüber der eigentlichen, mit dem Spannungsteiler $R_1$, $R_2$, $R_4$ eingestellten Referenzspannung $U_F$ um die Basisemitterspannung des Transistors $T_{19}$ zum Ausgleich der entsprechenden Basisemitterspannung des Transistors $T_8$ angehoben.

Das Ausgangssignal des Komparators $K_1$ wird als Triggersignal $T_X$ auf den Eingang der bistabilen Kippstufe FF gegeben.

In der Figur 9a ist das Eingangssteuersignal A dargestellt, das gemäß Figur 8 über die Diode $D_4$ auf den Ausgang der Schaltung ausgekoppelt und außerdem auf die Basiselektrode des Transistors $T_6$ und den zweiten Eingang der bistabilen Kippstufe FF gegeben wird.

In der Figur 9b ist das sägezahnförmige Signal B' am Eingang des Komparators $K_1$ dargestellt. Ferner ist in die Fig. 9b die Referenzspannung $U'_F$ und die Festspannung $U'_S$ eingetragen. Der

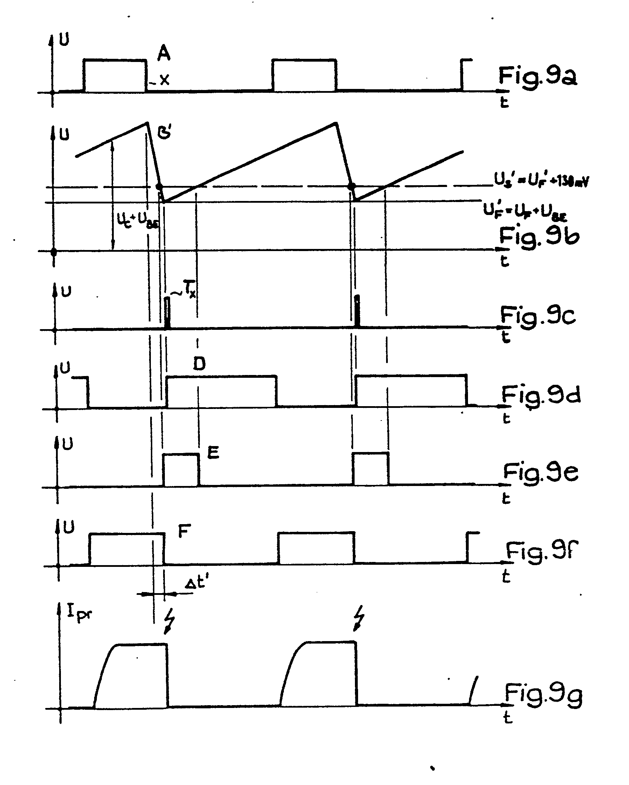

Komparator $K_1$ gibt nur dann ein Ausgangssignal $T_X$ gemäß Fig. 9c ab, wenn das sägezahnförmige Signal B' die Referenzspannung $U_F$ erreicht. Der Ausgang des Komparators $K_1$ am Kollektor des Transistors $T_{11}$ hat somit Low-Pegel, wenn gilt $U_C + U_{BE} > U_F'$. Bei $U_C + U_{BE} \leqq U_F'$ weist das Ausgangssignal $T_X$ den High-Pegel auf.

Am Ausgang der bistabilen Kippstufe FF erscheint beim Auftreten des Impulses $T_X$ der Fig. 9c High-Potential gemäß Fig. 9d. Dieses Potential bleibt erhalten, bis die Low-High-Flanke des Eingangssteuersignals A den Ausgang der bistabilen Kippstufe FF wieder auf Low zurücksetzt. Folglich stellt sich am Ausgang der bistabilen Kippstufe FF das in der Fig. 9d dargestellte mäanderförmige Signal D ein. Dieses Signal D wird auf die Basiselektrode des Transistors $T_7$ gegeben, so daß dann, wenn D auf High-Potential liegt, der Transistor $T_7$ durchgeschaltet ist und die Basis des Transistors $T_5$ auf Low-Potential liegt. Dadurch kann der Entladestrom $I_E$ während der High-Phase des Signals D nicht fließen. Auch während der High-Phase des Eingangssteuersignals A wird der Entladestrom $I_E$ des Kondensators über den Transistor $T_6$ auf gleiche Weise blockiert. Während der High-Phasen der Signale A und D wird folglich der Kondensator C mit Hilfe des Ladestroms $I_L$ aufgeladen. Beim Auftreten der Steuerflanke X des Eingangssteuersignals A sind dagegen beide Transistoren $T_6$ und $T_7$ gesperrt, so daß der Entladestrom $I_E$ des Kondensators C bis zum Auftreten der Low-High-Flanke des Signals D fließen kann, so daß der in Fig. 9b dargestellte Funktionsverlauf B des sägezahnförmigen Signals am Kondensator C realisiert wird. Zusammengefaßt gilt:

A oder D = "High" C wird aufgeladen

A und D = "Low' C wird entladen

Die Fig. 8 enthält einen zweiten Komparator $K_2$ aus den Transistoren $T_{14}$ bis $T_{16}$. Auf die eine Eingangselektrode dieses zweiten Komparators, die der Basiselektrode des Transistors $T_{15}$ entspricht, wird die Festspannung $U_S'$ gegeben, für die gilt: $U_S' = U_F' + 130\ mV$, wenn die bereits erläuterten Dimensionierungsverhältnisse zugrunde gelegt werden. An der zweiten Eingangselektrode des Komparators $K_2$, die der Basiselektrode des Transistors $T_{14}$ entspricht, liegt wiederum das der Kondensatorspannung entsprechende sägezahnförmige Signal B'.

Am Ausgang des Komparators $K_2$, der dem Kollektor des Transistors $T_{16}$ entspricht, wird das in der Fig. 9e dargestellte Signal E abgegriffen. Der Transistor $T_{16}$ wird nur dann durchgesteuert, wenn der Transistor $T_{15}$ des Komparators $K_2$ auch leitend ist. Dies ist dann der Fall, wenn gilt: $U_S' \geqq U_C + U_{BE}$. Nur während dieser Zeiten hat das Signal E gemäß Fig. 9e High-Potential.

Das Signal E an der Kollektorelektrode des Transistors $T_{16}$ und das Ausgangssignal D der bistabilen Kippstufe FF werden nunmehr zur Erzeugung des Korrektursignals F auf ein Gatter G gegeben. Dieses Gatter G ist gemäß der Schaltung nach der Fig. 8 ein NOR-Gatter aus den Transistoren $T_{17}$ und $T_{18}$. Die beiden Transistoren sind an den Kollektorelektroden und an den Emitterelektroden miteinander verbunden. Dem einen Eingang des NOR-Gatters G, der durch die Basiselektrode des Transistors $T_{17}$ gebildet wird, wird das Signal E zugeführt. Dem anderen eingang des NOR-Gatters G der durch die Basiselektrode des Transistors $T_{18}$ gebildet wird, wird das Ausgangssignal D der bistabilen Kippstufe FF zugeführt. Das Ausgangssignal F wird an den Kollektorelektroden der beiden Transistoren $T_{17}$ und $T_{18}$ abgegriffen. F liegt nur dann auf High-Potential wenn beide Eingangssignale des NOR-Gatters Low sind. Das Ausgangssignal F hat somit den mäanderförmigen Verlauf gemäß Fig. 9f, bei dem die Low-High-Flanke der Low-High-Flanke des Eingansteuersingnals A entspricht und die High-Low-Flanke durch die Low-High-Flanke des Signals E definiert wird. Das Ausgangssignal F ist somit um die Zeit $\Delta t'$ gegenüber dem Steuersignal A verlängert, wobei $\Delta t'$ der Zeit entspricht, die die abfallende Flanke des sägezahnförmigen Signals B' bis zum Erreichen der Spannung $U_S'$ benötigt. Das Ausgangssignal F wird über eine Diode $D_3$ auf den Ausgang der in der Fig. 8 dargestellten Schaltung gegeben. Der Verlauf des Stromflusses in der Primärspule bei vorhandenem Korrektursignal F gemäß Fig. 9f ist in der Fig. 9g dargestellt.

Auf den Schaltungsausgang gelangt auch über die Diode $D_4$ das Eingangssteuersignal A, das dann bei höheren Drehzahlen alleine den Primärstrom in der Zündspule bestimmt. Bei diesen höheren Drehzahlen, beispielsweise bei Drehzahlen über 1000 U/min, ist das Ausgangssignal F immer auf Low, da der Transistor $T_{16}$ in der Fig. 8 ab dieser Drehzahl ständig durchgesteuert wird. Der der Kompensation dienende Schaltungsteil beeinflußt somit ab einer definierten Schwell-Drehzahl nicht mehr den Stromfluß in der Primärspule.

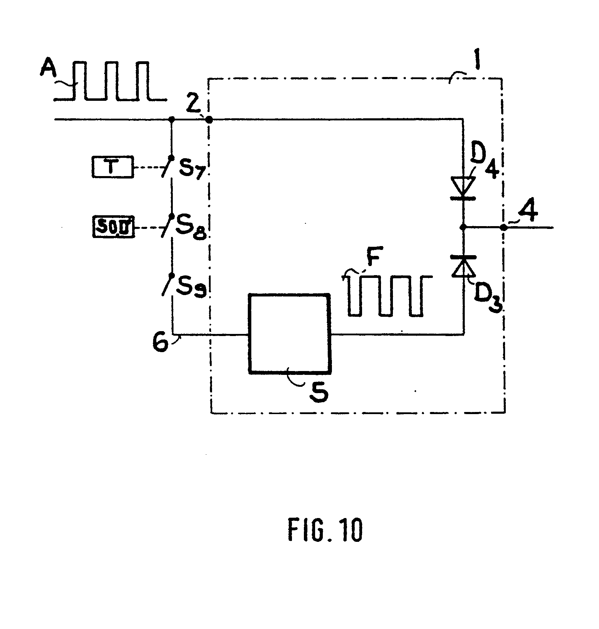

Fig. 10 zeigt noch ein Ausführungsbeispiel über die Abschaltmöglichkeiten des Korrektursignals. Das elektronisch geregelte Zündsystem 1 für eine Brennkraftmaschine erhält an seinem Eingang 2 ein mäanderförmiges Steuersignal A. Dieses Steuersignal A wird einerseits direkt über die Diode $D_4$ auf den Ausgang 4 des Zündsystems 1 geführt. Dort wird es vom Korrektursignal F überlagert, das in der Korrekturschaltung 5 aus dem Steuersignal A in der beschriebenen Weise gewonnen wird.

In der Zuführung 6 des Steuersignals A zur Korrekturschaltung 5 sind in Reihe drei Schalter $S_7$, $S_8$ und $S_9$ angeordnet, mit denen die Korrekturschaltung 5 und damit das Korrektursignal F abgeschaltet werden können.

Der Schalter $S_7$ arbeitet motortemperaturabhängig und ist nur bis zu einer Temperatur von z.B. 60° C geschlossen. Oberhalb dieser Temperatur ist er geöffnet und macht unabhängig vom Schaltzustand der Schalter $S_8$ und $S_9$ das Korrektursignal F unwirksam.

Der Schalter S8 ist nur während des Anlaßvorgangs der Brennkraftmaschine geschlossen. Er wird beispielsweise vom Zünd-/Anlaßschalter oder vom Ausgang D+ des Fahrzeuggenerators gesteuert. Nach Beendigung des Anlaßvorgangs ist der Schalter S8 geöffnet und schaltet ebenfalls das Korrektursignal F ab.

Mit Hilfe des Schalters S9 läßt sich das Korrektursignal F generell unwirksam schalten. Abhängig vom jeweiligen Fahrzeug- bzw. Motormodell ist der Schalter S9 geschlossen bzw. geöffnet. Im letzteren Fall wird das Korrektursignal F nicht erzeugt. Zum Ausgang 4 des Zündsystems gelangt lediglich das Steuersignal A. Auf diese Weise kann das Zündsystem 1 auch bei Fahrzeugen verwendet werden, bei denen der Zündwinkel allein durch das Steuersignal A vorgegeben wird.

Anstelle der dargestellten Möglichkeiten, das Korrektursignal mit Hilfe der Schalter S7 und S9 zu unterdrücken, können entsprechend den jeweiligen Erfordernissen nur einer der Schalter S7 bis S9 oder bliebige Kombinationen von zweien dieser Schalter vorgesehen sein. Ferner ist es möglich, weiteren Einsatzerfordernissen durch zusätzliche Schalter entsprechend diesen Schaltern S7 bis S9 Rechnung zu tragen.

**Patentansprüche**

1) Elektronisch geregeltes Zündsystem für eine Brennkraftmaschine bei dem aus einem direkt von einem Zündimpulsgeber abgeleiteten mäanderförmigen Steuersignal (A) ein die Zündung korrigierendes Signal abgeleitet wird, wobei innerhalb jeweils einer Periode des Steuersignals (A) aus nur einer Flanke (X) dieses Steuersignals ein sägezahnförmiges Spannungssignal (B) mit einer ansteigenden Flanke (B1) und einer abfallenden Flanke (B2) erzeugt wird, indem die Steuerflanke (X) des Steuersignals (A) innerhalb einer Periode die eine Flanke (B2) des sägezahnförmigen Signals (B) auslöst, die beim Erreichen eine Referenzspannung (UF) unter Auslösung der anderen Flanke (B1) endet, welche beim Auftreten der Steuerflanke (X) in der nachfolgenden Periode des Steuersignals (A) wiederum durch die eine Flanke (B2) des sägezahnförmigen Signals abgelöst wird, und wobei das Verhältnis der Steilheiten beider Flanken ein Maß für die Veränderung des Korrektursignals (F) gegenüber dem Steuersignal (A) ist, dadurch gekennzeichnet, daß die abfallende Flanke (B2) des sägezahnförmigen Signals (B) mit einer Festspannung (US) verglichen wird, die größer ist als die Referenzspannung (UF) und daß das Korrektursignal (F) gegenüber dem Steuersignal (A) um ein Zeitintervall (Δt') verlängert bzw. das Auftreten einer Flanke des Korrektursignals gegenüber der entsprechenden Steuerflanke (X) des Steuersignals verzögert wird, wobei dieses Zeitintervall (Δt') durch die Zeitdauer der abfallenden Flanke (B2) bis zum Erreichen der Festspannung (US) gegeben ist.

2) Elektronisch geregeltes Zündsystem nach Anspruch 1 oder 2, dadurch gekennzeichnet, daß die Steuerflanke (X) jeweils die High-Low-Flanke des mäanderförmigen Steuersignals (A) ist.

3) Elektronisch geregeltes Zündsystem nach Anspruch 1 und 2, dadurch gekennzeichnet, daß das sägezahnförmige Signal (B) durch den Spannungsverlauf an einem Kondensator (C) gegeben ist, der mit den die Steilheiten der Signalflanken (B1, B2) bestimmenden Strömen bis zum Auftreten einer Steuerflanke (X) des Steuersignals (A) aufgeladen und danach bis zum Erreichen der Referenzspannung (UF) entladen wird.

4) Elektronisch geregeltes Zündsystem nach einem der vorausgehenden Ansprüche, dadurch gekennzeichnet, daß Mittel zur Abschaltung des Korrektursignals (F) vorgesehen sind.

5) Elektronisch geregeltes Zündsystem nach Anspruch 4, dadurch gekennzeichnet, daß das Korrektursignal (F) nur während des Anlaßvorgangs der Brennkraftmaschine wirksam ist (Schalter S8).

6) Zündsystem nach Anspruch 4 oder 5, dadurch gekennzeichnet, daß das Korrektursignal (F) in Abhängigkeit von der Brennkraftmaschinen-Temperatur schaltbar ist (Schalter S7).

7) Zündsystem nach einem der Ansprüche 4 bis 6, dadurch gekennzeichnet, daß das Korrektursignal (F) in Abhängigkeit vom jeweiligen Fahrzeugmodell bzw. der jeweiligen Motorausführung schaltbar ist (Schalter S9).

8) Elektronisch geregeltes Zündsystem nach Anspruch 1, dadurch gekennzeichnet, daß der Potentialabstand (ΔU) zwischen der Festspannung (US) und der Referenzspannung (UF) so gewählt wird, daß beim Erreichen einer bestimmten Schwelldrehzahl des Rotors das sägezahnförmige Signal in seinem Maximum den Festspannungswert (US) gerade nicht mehr erreicht, so daß ab dieser Schwelldrehzahl das Steuersignal (A) nicht mehr verlängert bzw. die Steuerflanke (X) nicht mehr verzögert wird, während unterhalb dieser Schwelldrehzahl die Verlängerung des Korrektursignals (F) bzw. die Verzögerung der die Zündung auslösenden Flanke mit abnehmender Drehzahl zunimmt.

9) Elektronisch geregeltes Zündsystem nach Anspruch 1 oder 8, dadurch gekennzeichnet, daß die Steilheiten der Flanken (B1, B2) des sägezahnförmigen Signals (B) sowie die Festspannung (US) und die Referenzspannung (UF) so gewählt sind, daß bei der kleinsten Drehzahl des Rotors das Korrektursignal (F) um einen definierten maximalen Wert (Ao) gegenüber dem Steuersignal (A) verlängert bzw. die die Zündung verursachende Flanke des Korrektursignals gegenüber der Steuerflanke (X) verzögert wird und daß dieser Wert linear bis zum Erreichen des Wertes "Null" bei der Schwelldrehzahl abnimmt.

10) Elektronisch geregeltes Zündsystem nach Anspruch 9, dadurch gekennzeichnet, daß die Verlängerung des Korrektursignals (F) gegenüber dem Steuersignal (A) bei ca. 50 U/min ca. 6 % der Periodendauer beträgt, und daß die Schwelldrehzahl, ab der das Steuersignal (A) nicht mehr korrigiert wird, bei ca. 1000 U/min liegt.

11) Elektronisch geregeltes Zündsystem nach einem der vorangehenden Ansprüche, dadurch gekennzeichnet, daß Stromquellen vorgesehen sind, über die ein Kondensator (C) zur Erzeugung des sägezahnförmigen Signals (B) auf-und entladen wird, daß ein 1. Komparator (K1) vorgesehen ist, an dem die Kondensatorspannung ($U_C + U_{BE}$) mit der Referenzspannung ($U'_F$) verglichen wird und daß ein 2. Komparator (K2) vorgesehen ist, an dem die Kondensatorspannung ($U_C + U_{BE}$) mit der Festspannung ($U'_S$) verglichen wird.

12) Elektronisch geregeltes Zündsystem nach Anspruch 11, dadurch gekennzeichnet, daß eine bistabile Kippstufe (FF) vorgesehen ist, die über den Ausgang 1. Komparators (K1) in den stabilen Zustand und von der Low-High-Flanke des Steuersignals (A) in den anderen stabilen Zustand übergeführt wird.

13) Elektronisch geregeltes Zündsystem nach Anspruch 11 oder 12, dadurch gekennzeichnet, daß ein NOR-Gatter (G) vorgesehen ist, dessen einem Eingang das Ausgangssignal (D) der Kippstufe (FF) und dessen anderem Eingang das Ausgangssignal (E) des 2. Komparators (K2) zugeführt wird und an dessen Ausgang das Korrektursignal (F) abgegriffen wird.

14) Elektronisch geregeltes Zündsystem nach Anspruch 11, dadurch gekennzeichnet, daß der Ladestrom ($I_L$) des Kondesators (C) ständig fließt und der Entladestrom ($I_E$) des Kondensators nur zwischen dem Auftreten einer Steuerflanke (X) des Steuersignals und dem Zeitpunkt, wo die Kondensatorspannung die Referenzsspannung ($U_F$) erreicht, fließt.

15) Elektronisch geregeltes Zündsystem nach Anspruch 14, dadurch gekennzeichnet, daß die den Entladestrom ($I_E$) liefernde Stromquelle sowohl durch das High-Potential des Steuersignals (A) als auch durch das High-Potential des Ausgangssignals (D) der bistabilen Kippstufe (FF) blockiert wird.

16) Elektronisch geregeltes Zündsystem nach einem der vorangehenden Ansprüche, dadurch gekennzeichnet, daß die den Lade- und den Entladestrom des Kondensators liefernden Stromquellen nach Art eines Stromspiegelverstärkers ($T_4$, $T_5$) miteinander verknüpft sind, wobei das Verhältnis der aktiven Flächen der den Stromspiegelverstärker bildenden Transistoren das Verhältnis zwischen Lade- und Entladestrom bestimmt.

**Claims**

1. Electronically controlled ignition system for an internal combustion engine, wherein a signal correcting the ignition is derived from a meander-shaped control signal (A) directly derived from an ignition pulse generator, with a sawtooth-shaped voltage signal (B) with a rising edge (B1) and a falling edge (B2) being generated within one respective period of the control signal (A) from only one edge (X) of this control signal by the control edge (X) of the control signal (A) triggering within one period the one edge (B2) of the sawtooth-shaped signal (B) which ends when a reference voltage ($U_F$) is reached, which triggers the other edge (B1) which, upon occurrence of the control edge (X) in the subsequent period of the control signal (A) is, in turn, relieved by the edge (B2) of the sawtooth-shaped signal, with the ratio of the slopes of both edges serving as a measure for the alteration of the correction signal (F) in relation to the control signal (A), characterized in that the falling edge (B2) of the sawtooth-shaped signal (B) is compared with a fixed voltage ($U_S$) which is larger than the reference voltage ($U_F$), and in that the correction signal (F) is prolonged in relation to the control signal (A) by a time interval ($\Delta t'$), i.e., the occurrence of an edge of the correction signal is delayed in relation to the corresponding control edge (X) of the control signal, with this time interval ($\Delta t'$) being determined by the duration of the falling edge (B2) until the fixed voltage ($U_S$) is reached.

2. Electronically controlled ignition system as defined in claims 1 or 2, characterized in that the control edge (X) is the high-low edge of the meander-shaped control signal (A), in each case.

3. Electronically controlled ignition system as defined in claims 1 and 2, characterized in that the sawtooth-shaped signal (B) is determined by the voltage waveform at a capacitor (C) which is charged with the currents determining the slopes of the signal edges (B1, B2) until occurrence of a control edge (X) of the control signal (A) and is then discharged until the reference voltage ($U_F$) is reached.

4. Electronically controlled ignition system as defined in one of the preceding claims, characterized in that means are provided to switch off the correction signal (E).

5. Electronically controlled ignition system as defined in claim 4, characterized in that the correction signal (F) is only effective (switch S8) during the starting-up procedure of the internal combustion engine.

6. Ignition system as defined in claims 4 or 5, characterized in that the correction signal (F) is switchable (switch S7) in dependence upon the internal combustion engine temperature.

7. Ignition system as defined in one of claims 4 to 6, characterized in that the correction signal (F) is switchable (switch S9) in dependence upon the respective vehicle model or the respective engine type.

8. Electronically controlled ignition system as defined in claim 1, characterized in that the potential spacing ($\Delta U$) between the fixed voltage ($U_S$) and the reference voltage ($U_F$) is so selected that when a certain threshold speed of the rotor is reached, the sawtooth-shaped signal at its maximum just hardly reaches the fixed voltage value ($U_S$) so that from this threshold speed onwards the control signal (A) is no longer prolonged, i.e.,the control edge (X) is no longer delayed, whereas below this threshold speed the prolongation of the correction signal (F), i.e.,the delay of the edge triggering the ignition increases as the speed decreases.

9. Electronically controlled ignition system as defined in claims 1 or 8, characterized in that the slopes of the edges (B1, B2) of the sawtooth-shaped signal (B) and also the fixed voltage ($U_S$) and the reference voltage ($U_F$) are so selected that at the lowest speed of the rotor, the correction signal (F) is prolonged by a defined maximum value (Ao) in relation to the control signal (A), i.e., the edge of the correction signal causing the ignition is delayed in relation to the control edge (X), and in that this value decreases linearly until the value "zero" at the threshold speed is reached.

10. Electronically controlled ignition system as defined in claim 9, characterized in that the prolongation of the correction signal (F) in relation to the control signal (A) at approximately 50 rpm is approximately 6 % of the period duration, and in that the threshold speed from which the control signal (A) is no longer corrected is approximately 1000 rpm.

11. Electronically controlled ignition system as defined in one of the preceding claims, characterized in that current sources are provided via which a capacitor (C) is charged and discharged to produce the sawtooth-shaped signal (B), in that a first comparator (K1) is provided at which the capacitor voltage ($U_C + U_{BE}$) is compared with the reference voltage ($U_F'$), and in that a second comparator (K2) is provided at which the capacitor voltage ($U_C + U_{BE}$) is compared with the fixed voltage ($U_S'$).

12. Electronically controlled ignition system as defined in claim 11, characterized in that a bistable multivibrator stage (FF) which is transferred via the output of the first comparator (K1) into the stable state and by the low-high edge of the control signal (A) into the other stable state is provided.

13. Electronically controlled ignition system as defined in claims 11 or 12, characterized in that a NOR gate (G) is provided, whose one input is fed the output signal (D) of the multivibrator stage (FF) and whose other input is fed the output signal (E) of the second comparator (K2) and at whose output the correction signal (F) is tapped.

14. Electronically controlled ignition system as defined in claim 11, characterized in that the charge current ($I_L$) of the capacitor (C) flows constantly and the discharge current ($I_E$) of the capacitor only between the occurrence of a control edge (X) of the control signal and the point in time at which the capacitor voltage reaches the reference voltage ($U_F$).

15. Electronically controlled ignition system as defined in claim 14, characterized in that the current source supplying the discharge current ($I_E$) is blocked both by the high potential of the control signal (A) and by the high potential of the output signal (D) of the bistable multivibrator stage (FF).

16. Electronically controlled ignition system as defined in one of the preceding claims, characterized in that the current sources supplying the charge and the discharge current of the capacitor are interlinked as a kind of current mirror amplifier ($T_4$, $T_5$), with the ratio of the active surfaces of the transistors forming the current mirror amplifier determining the ratio between charge and discharge current.


**Revendications**

1. Système d'allumage électronique intégral pour un moteur thermique dans lequel un signal de correction de l'allumage est dérivé d'un signal de commande rectangulaire (A) dérivé directement d'un générateur d'impulsions d'allumage, un signal en tension en dents de scie (B), présentant un flanc croissant (B1) et un flanc décroissant (B2), étant produit au cours de chaque période du signal de commande (A) à partir d'un seul flanc (X) de ce dernier, le flanc de commande (X) du signal de commande (A) déclenchant au cours d'une période le flanc (B2) du signal en dents de scie (B) qui, quand une tension de référence ($U_F$) est atteinte, se termine en déclenchant l'autre flanc (B1) qui, lors de l'apparition du flanc de commande (X) pendant la période suivante du signal de commande (A), est de nouveau remplacé par le flanc (B2) du signal en dents de scie, et, le rapport des pentes des deux flancs étant une mesure de la variation du signal de correction (F) par rapport au signal de commande (A), ledit système d'allumage étant caractérisé en ce que le flanc décroissant (B2) du signal en dents de scie (B) est comparé à une tension fixe ($U_S$) supérieure à la tension de référence ($U_F$); et le signal de correction (F) est prolongé d'un intervalle de temps ($\Delta t'$) par rapport au signal de commande (A) ou l'apparition d'un flanc du signal de correction est retardé par rapport au flanc de commande (X) correspondant du signal de commande, ledit intervalle de temps ($\Delta t'$) étant fixé par la durée du flanc décroissant (B2) jusqu'à ce que la tension fixe ($U_S$) soit atteinte.

2. Système d'allumage électronique intégral selon revendication 1, caractérisé en ce que le flanc de commande (X) est toujours le flanc haut-bas du signal de commande rectangulaire (A).

3. Système d'allumage électronique intégral selon revendications 1 et 2, caractérisé en ce que le signal en dents de scie (B) est défini par la courbe de tension aux bornes d'un condensateur (C) que des courants déterminant les pentes des flancs de signal (B1, B2) chargent jusqu'à l'apparition d'un flanc de commande (X) du signal de commande (A), puis déchargent jusqu'à ce que la tension de référence ($U_F$) soit atteinte.

4. Système d'allumage électronique intégral selon une quelconque des revendications 1 à 3, caractérisé par des moyens de coupure du signal de correction (F).

5. Système d'allumage électronique intégral selon revendication 4, caractérisé en ce que le signal de correction (F) agit uniquement pendant l'opération de démarrage du moteur thermique (interrupteur S8).

6. Système d'allumage selon une des revendications 4 ou 5, caractérisé en ce que le signal de correction (F) est commutable en fonction de la température du moteur thermique (interrupteur S7).

7. Système d'allumage selon une quelconque des revendications 4 à 6, caractérisé en ce que le signal de correction (F) est commutable en fonction du modèle de véhicule ou de moteur considéré (interrupteur S9).

8. Système d'allumage électronique intégral selon revendication 1, caractérisé en ce que la différence de potentiel ($\Delta U$) entre la tension fixe ($U_S$) et la tension de référence ($U_F$) est choisie de façon que lorsque le rotor atteint un seuil de vitesse déterminé, le maximum du signal en dents de scie soit légèrement inférieur à la tension fixe ($U_S$), de sorte qu'à partir de ce seuil, le signal de commande (A) n'est plus prolongé ou le flanc de commande (X) n'est plus retardé, alors qu'au-dessous de ce seuil, la prolongation du signal de correction (F) ou le retard du flanc déclenchant l'allumage augmente quand la vitesse de rotation diminue.

9. Système d'allumage électronique intégral selon une des revendications 1 ou 8, caractérisé en ce que les pentes des flancs (B1, B2) du signal en dents de scie (B), la tension fixe ($U_S$) et la tension de référence ($U_F$) sont choisies de façon qu'à la vitesse de rotation minimale du rotor, le signal de correction (F) soit prolongé d'une valeur maximale définie ($A_o$) par rapport au signal de commande A ou que le flanc du signal de correction provoquant l'allumage soit retardé par rapport au flanc de commande (X) et que cette valeur décroisse linéairement pour s'annuler au seuil de vitesse.

10. Système d'allumage électronique intégral selon revendication 9, caractérisé en ce que la prolongation du signal de correction (F) par rapport au signal de commande (A) est d'environ 6 % de la période à 50 tr/mn environ; et le seuil de vitesse à partir duquel le signal de commande (A) n'est plus corrigé se situe à 1000 tr/mn environ.

11. Système d'allumage électronique intégral selon une quelconque des revendications 1 à 10, caractérisé par des sources de courant qui chargent et déchargent un condensateur (C) pour la production du signal en dents de scie (B); par un premier comparateur (K1) qui compare la tension aux bornes du condensateur ($U_C + U_{BE}$) à la tension de référence ($U'_F$); et par un second comparateur (K2) qui compare la tension aux bornes du condensateur ($U_C + U_{BE}$) à la tension fixe ($U'_S$).

12. Système d'allumage électronique intégral selon revendication 11, caractérisé par une bascule bistable (FF) que la sortie du premier comparateur (K1) fait passer dans un état stable et que le flanc bas-haut du signal de commande (A) fait passer dans le second état stable.

13. Système d'allumage électronique intégral selon une des revendications 11 ou 12, caractérisé par un opérateur NI (G) dont une entrée reçoit le signal de sortie (D) de la bascule (FF), dont la seconde entrée reçoit le signal de sortie (E) du second comparateur (K2) et sur la sortie duquel est prélevé le signal de correction (F).

14. Système d'allumage électronique intégral selon revendication 11, caractérisé en ce que le courant de charge ($I_L$) du condensateur (C) circule constamment et le courant de décharge ($I_E$) du condensateur cicule uniquement entre l'apparition d'un flanc de commande (X) du signal de commande et l'instant où la tension aux bornes du condensateur atteint la tension de référence ($U_F$).

15. Système d'allumage électronique intégral selon revendication 14, caractérisé en ce que la source de courant délivrant le courant de décharge ($I_E$) est bloquée par le potentiel haut du signal de commande (A) et par le potentiel haut du signal de sortie (D) de la bascule bistable (FF).

16. Système d'allumage électronique intégral selon une quelconque des revendications 1 à 15, caractérisé en ce que les sources de courant délivrant les courants de charge et de décharge du condensateur sont interconnectés par un amplificateur miroir de courant ($T_4$, $T_5$), le rapport des surfaces actives des transistors qui forment ledit amplificateur déterminant le rapport des courants de charge et de décharge.

0 073 952

Fig. 1a

Fig. 1b

Fig. 1c

Fig. 1d

1

Fig.2

Fig.3

Fig.4a

Fig.4b

Fig.4c

Fig.4d

Fig.4e

Fig. 5

Fig. 6a

Fig. 6b

Fig. 6c

Fig. 7a

Fig. 7b

F = A

Fig.8

Fig.9a

Fig.9b

$U_s' = U_F' + 130\,mV$

$U_F' = U_F + U_{BE}$

Fig.9c

Fig.9d

Fig.9e

Fig.9f

Fig.9g

FIG. 10